(19) **Europäisches Patentamt / European Patent Office / Office européen des brevets**

(11) **EP 3 391 331 B1**

(12) **FASCICULE DE BREVET EUROPEEN**

(45) Date de publication et mention de la délivrance du brevet:
**14.05.2025 Bulletin 2025/20**

(21) Numéro de dépôt: **16825475.3**

(22) Date de dépôt: **09.12.2016**

(51) Classification Internationale des Brevets (IPC):
***G06T 5/00*** *(2024.01)*

(52) Classification Coopérative des Brevets (CPC):
**G06T 5/92;** G06T 2207/20208

(86) Numéro de dépôt international:
**PCT/FR2016/053321**

(87) Numéro de publication internationale:
**WO 2017/103399 (22.06.2017 Gazette 2017/25)**

(54) **PROCEDE DE TRAITEMENT D'UNE IMAGE NUMERIQUE, DISPOSITIF, EQUIPEMENT TERMINAL ET PROGRAMME D'ORDINATEUR ASSOCIES**

VERFAHREN ZUR VERARBEITUNG EINES DIGITALEN BILDES, VORRICHTUNG, ENDGERÄTEAUSRÜSTUNG UND COMPUTERPROGRAMM IM ZUSAMMENHANG DAMIT

METHOD OF PROCESSING A DIGITAL IMAGE, DEVICE, TERMINAL EQUIPMENT AND COMPUTER PROGRAM ASSOCIATED THEREWITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2015 FR 1562446**
**29.07.2016 FR 1657443**

(43) Date de publication de la demande:
**24.10.2018 Bulletin 2018/43**

(73) Titulaire: **FONDATION B-COM**
**35510 Cesson-Sévigné (FR)**

(72) Inventeurs:
• **BIST, Cambodge**
**35700 Rennes (FR)**
• **COZOT, Rémi**
**22350 Yvignac La Tour (FR)**
• **MADEC, Gérard**
**35250 Chasne Sur Illet (FR)**

(74) Mandataire: **Jacobacci Coralis Harle**
**32, rue de l'Arcade**
**75008 Paris (FR)**

(56) Documents cités:
• **BELEN MASIA ET AL: "Multilinear Regression for Gamma Expansion of Overexposed Content", TECHNICAL REPORT RR-03-11, 11 July 2011 (2011-07-11), pages 1 - 13, XP055293401, Retrieved from the Internet <URL:http://citeseerx.ist.psu.edu/viewdoc/download?doi=10.1.1.454.7651&rep=rep1&type=pdf> [retrieved on 20160803]**
• **BELEN MASIA ET AL: "Evaluation of reverse tone mapping through varying exposure conditions", ACM TRANSACTIONS ON GRAPHICS, vol. 28, no. 5, 1 December 2009 (2009-12-01), pages 1, XP055169980, ISSN: 0730-0301, DOI: 10.1145/1618452.1618506**
• **FORD A ET AL: "COLOUR SPACE CONVERSIONS", INTERNET CITATION, 11 August 1998 (1998-08-11), XP002311069, Retrieved from the Internet <URL:http://www.poynton.com/PDFs/coloureq.pdf> [retrieved on 19980811]**

**Description**

## 1. Domaine de l'invention

Le domaine de l'invention est celui du traitement d'images numériques et de séquences d'images numériques dont les informations de couleur sont représentées dans un premier intervalle de valeurs, en vue de leur restitution sur un dispositif d'affichage apte à les représenter sur un deuxième intervalle de valeurs, supérieur au premier.

L'invention peut notamment, mais non exclusivement, s'appliquer à la conversion d'intensités de couleurs d'images numériques représentées selon un format standard ou SDR (pour « Standard Dynamic Range », en anglais) en vue de leur restitution sur un dispositif d'affichage conforme à un format HDR (pour « High Dynamic Range », en anglais).

## 2. Présentation de l'art antérieur

On voit apparaître aujourd'hui une nouvelle génération de dispositifs de restitution de contenus audiovisuels, tels que des téléviseurs, dits HDR, qui sont capables d'afficher des images avec une gamme étendue d'intensités de couleurs. Ces écrans offrent un niveau de luminosité très élevé (pour « high peak », en anglais) et des niveaux de contraste accrus entre les zones sombres et claires de l'image, qui procurent à l'utilisateur une proximité inégalée avec la réalité.

Actuellement, cette technologie coexiste encore avec le format SDR, qui reste la référence pour la transmission de contenus audiovisuels, si bien que pour profiter des capacités accrues d'un écran HDR, il est nécessaire de convertir le contenu SDR reçu au format HDR avant de l'afficher.

On connaît de l'article de Akyuz et al, intitulé « Do HDR displays support LDR content? A Psychophysical Evaluation », publié par ACM SIGGRAPH 2007 Papers, page 38, en 2007, une méthode d'expansion des intensités de couleur d'une image numérique d'entrée, basée sur un simple opérateur linéaire. Elle consiste à calculer la composante de luminance de l'image de sortie $Y_2$ comme une simple fonction linéaire de la composante de luminance $Y_1$ de l'image d'entrée, selon une formule du type :

$$L_{2(x,y)} = L_{max} \cdot \frac{Y_1(x,y) - Y_{1,min}}{Y_{1,max} - Y_{1,min}} \qquad (1)$$

où (x,y) sont les coordonnées d'un élément d'image dans l'image d'entrée, $Y_{1,max}$ la valeur maximale prise par la composante de luminance dans l'image d'entrée et $Y_{1,min}$ sa valeur minimale. Les résultats subjectifs obtenus par Akyuz avec cet opérateur sont considérés comme les meilleurs de la Littérature pour des images normalement exposées.

On connait aussi de l'article de Masia et al, intitulé « Evaluation of Reverse Tone Mapping Through Varying Exposure Conditions » publié dans la revue « ACM Transactions on Graphics », éditée par ACM, volume 28, page 160, en 2009, une méthode d'expansion des intensités de couleur d'une image numérique. Elle consiste en particulier à appliquer un opérateur global d'expansion d'intensité, non linéaire, aux informations de luminosité des éléments de l'image d'entrée. Cet opérateur prend la forme d'un exposant exprimé comme une fonction affine d'un indicateur représentatif de l'image, appelé clé de l'image (pour « image key », en anglais).

Cet indicateur clé est bien connu de l'homme de métier et s'exprime de la façon suivante

$$k = \frac{\log Y_{moy} - \log Y_{min}}{\log Y_{max} - \log Y_{min}} \qquad (2)$$

où $\log Y_{moy} = \frac{\left( \sum_{x,y} \log(Y(x,y) + \delta) \right)}{n}$, n le nombre d'éléments de l'image, Y(x,y) est l'intensité de luminance d'un élément de l'image et $\delta$ est un nombre réel positif qui prend une petite valeur permettant d'éviter les singularités quand l'intensité d'un pixel est nulle.

Le logarithme de la luminance est en effet connu comme une bonne approximation d'un niveau de luminosité ou d'illumination perçu par le système visuel humain. La clé de l'image k donne donc une indication d'un niveau global de luminosité ou de luminosité (pour « global brightness », en anglais) de l'image, tel que perçu par un observateur.

L'opérateur global d'expansion des intensités de luminosité de l'image d'entrée prend la forme suivante :

$$\gamma = a.k + b \qquad (3)$$

où a est un nombre réel qui vaut 10.44 et b est un nombre réel dont la valeur est fixée à - 6,282.

Sur l'ensemble d'images testées présenté dans l'article, on constate que la valeur de l'opérateur y augmente avec la valeur de la clé de l'image, les valeurs extrêmes étant égales à 1,1 et 2,26.

Un avantage de cette solution est qu'elle permet d'améliorer la qualité perçue des images de façon simple et réalisable en temps réel. En particulier, elle donne de bons résultats sur des images sur exposées présentant un niveau de contraste suffisant.

D'autres méthodes de conversion sont connues du rapport technique numéroté RR-03-11 , intitulé "Multilinear Regression for Gamma Expansion of Overexposed Content" écrit par Belen Masia et Diego Gutierrez, et publié par l'université de Saragosse.

### 3. Inconvénients de l'art antérieur

Un inconvénient des méthodes décrites dans l'art antérieur est qu'elles ne sont pas adaptées à tout type d'images. En particulier, pour des images présentant des niveaux de contraste et de luminosité plus extrêmes que les images testées, elles donnent aux images traitées une apparence artificielle inesthétique et peu fidèle aux images d'entrée.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui garantisse un rendu plus réaliste et plus respectueux du style d'éclairage originel de l'image d'entrée, tout en restant simple à mettre en œuvre et compatible avec des contraintes temps-réel.

### 5. Exposé de l'invention

Ces objectifs, ainsi que d'autres qui apparaîtront par la suite, sont atteints à l'aide d'un procédé de traitement d'au moins une image numérique en vue de sa restitution sur un dispositif d'affichage, ladite image comprenant des éléments d'image, un élément d'image étant associé à des informations de couleur représentées dans un premier espace colorimétrique comprenant une composante de luminance séparée de composantes de chrominance, ladite composante de luminance ayant une valeur comprise dans un premier intervalle de valeurs prédéterminé, ledit dispositif d'affichage étant apte à restituer des valeurs de composantes de luminance des éléments d'image comprises dans un deuxième intervalle de valeurs prédéterminé, de longueur supérieure à celle du premier intervalle, ledit procédé comprenant les étapes de :

- Détermination d'une information représentative d'un niveau global de luminosité de l'image perçu par un observateur, à partir des valeurs de la première composante de luminance des éléments de l'image;

- Calcul d'un exposant d'expansion en fonction de l'information de niveau global de luminosité déterminée ;

- Transformation des premières composantes de luminance des éléments de l'image en deuxième composantes de luminance, comprenant pour un élément de l'image, le calcul d'une valeur intermédiaire de luminance par application de l'exposant d'expansion calculé à la première valeur de composante de luminance et la multiplication de la valeur intermédiaire calculée par la longueur du deuxième intervalle de valeurs de luminance prédéterminées.

Le procédé selon l'invention est remarquable en ce que l'exposant d'expansion calculé est une fonction décroissante de l'information de niveau global de luminosité déterminée permettant que la valeur de l'exposant d'expansion diminue lorsque le niveau global de luminosité augmente.

Ainsi l'invention propose une solution nouvelle et inventive d'expansion de la gamme de valeurs des informations de luminance pour adapter le format d'une image d'entrée à celui du dispositif d'affichage dont la gamme est plus étendue.

Contrairement à l'art antérieur, qui choisit un exposant d'expansion dont la valeur augmente avec le niveau global de luminosité de l'image, l'invention propose un exposant d'expansion dont la valeur diminue lorsque le niveau global de luminosité augmente.

Les inventeurs ont identifié cinq classes de styles d'images représentatives des différentes combinaisons possibles de niveaux de luminosité et de contraste d'un large ensemble de séquences de tests. Ils ont ensuite mis en œuvre une expérimentation au cours de laquelle ils ont appliqué différentes valeurs d'exposants correcteurs aux séquences d'images de chacune de ces classes de style, puis demandé au panel d'observateurs d'en évaluer la qualité perçue.

A partir des résultats obtenus, les inventeurs ont constaté d'une part qu'une valeur d'exposant correcteur particulière pouvait être associée à chacune des classes. D'autre part ils ont établi une relation mathématique simple entre le niveau global de luminosité des images d'une classe et la valeur d'exposant correcteur à appliquer aux images de cette classe permettant d'obtenir une image de sortie adaptée d'un point de vue perceptuel.

Selon l'invention, l'exposant calculé est proportionnel au logarithme de l'inverse de l'information représentative d'un niveau global de luminosité de l'image.

Un avantage de cette relation mathématique est qu'elle permet un rendu fidèle du style d'éclairage de l'image tout en restant simple à mettre en œuvre avec des ressources de calcul limitées compatibles avec des exigences de traitement en temps réel.

Selon une caractéristique avantageuse de l'invention, l'étape de détermination d'un niveau global de luminosité comprend l'obtention d'une valeur médiane de la composante de luminance de l'image, la normalisation de la valeur médiane obtenue et en ce que l'information représentative d'un niveau global de luminosité de l'image est proportionnelle à la valeur médiane obtenue normalisée.

Un avantage de recourir à la médiane des valeurs de luminance d'une image est qu'elle prend des valeurs qui restent stables d'une image à l'autre d'une séquence d'images. On évite ainsi tout effet de scintillement ou battement (pour « flickering », en anglais) lors de la restitution de la séquence.

Selon un autre aspect de l'invention, l'étape de détermination d'une information représentative d'un niveau global de luminosité comprend en outre une étape préalable de conversion de la première composante de luminance du premier espace colorimétrique en une composante de clarté d'un deuxième espace colorimétrique, préalable à l'étape de calcul de l'exposant d'expansion et en ce que la valeur médiane est obtenue à partir de la composante de clarté.

Par exemple la premier composante de luminance est convertie dans l'espace colorimétrique CIEL*a*b*connu pour produire une composante de clarté perceptuellement linéaire. Un premier avantage est que les valeurs de clarté sont mieux réparties sur l'intervalle de valeurs possibles. Un deuxième avantage est de rendre l'information de niveau global de luminosité plus proche de celle réellement perçue par un observateur.

Selon encore un autre aspect de l'invention, l'étape de normalisation de la valeur médiane entre 0 et 1, préalable à l'étape de calcul de l'exposant d'expansion et en ce qu'il comprend une étape de correction (pour « clipping », en anglais) de la valeur médiane normalisée, une valeur comprise entre 0 et a, nombre réel positif non nul inférieur à 1, étant mise à la valeur a et une valeur comprise entre b et 1, avec b nombre réel supérieur à a et inférieur à 1, étant mise à la valeur b.

Un avantage de contenir les valeurs les plus extrêmes de la médiane est de borner les valeurs possibles de l'exposant d'expansion, ce qui permet d'éviter de produire des saturations des valeurs de luminances et de dénaturer le style d'éclairage originel de l'image d'entrée.

Selon un autre aspect de l'invention, l'étape de transformation met en œuvre les équations suivantes :

$$Y_2 = L_{max} . Y_1^{\gamma}$$

avec

$$\gamma = 1 + \log_{10} \frac{1}{L^*_{med,n}}$$

où $Y_1$ désigne la première composante de luminance, $Y_2$ la deuxième composante de luminance, $\log_{10}$ le logarithme décimal, y l'exposant d'expansion appliqué à la première composante de luminance $Y_1$ et $L_{med,n}^*$ la valeur médiane de luminance normalisée et clippée .

Un avantage de cette expression mathématique qui relie la deuxième composante de luminance à la première est qu'elle est simple à mettre en œuvre, tout en garantissant un rendu réaliste et respectueux du style d'éclairage originel de l'image d'entrée, quel que soit le niveau global de luminosité de l'image d'entrée.

Selon encore un autre aspect de l'invention, le procédé comprend une étape de transformation des premières composantes de chrominance de l'image en deuxièmes composantes, par application aux premières composantes de chrominance d'un coefficient d'expansion proportionnel à un ratio entre la deuxième composante de luminance et la première composante de luminance, selon l'expression suivante :

$$C_2 = \frac{C_1 . Y2}{Y_1}$$

Un avantage de ce mode de réalisation est sa simplicité.

Selon un autre aspect de l'invention, le procédé comprend une étape de transformation des premières composantes de chrominance de l'image en deuxièmes composantes de chrominance, comprenant une sous-étape de correction de couleurs par application aux premières composantes de chrominance d'une fonction de correction qui dépend de la première et de la deuxième composantes de luminance et d'un facteur de saturation , qui est un réel strictement supérieur à 1, selon l'expression suivante :

$$C_2 = \left( \left( \frac{C_1}{Y_1} - 1 \right) . s + 1 \right) Y_2$$

Un avantage de ce mode de réalisation est qu'en saturant les composantes de chrominance, il permet un rendu des couleurs qui est plus intense.

Avantageusement, l'étape de transformation des premières composantes de chrominance comprend une sous-étape de conversion d'un premier espace colorimétrique vers un deuxième espace colorimétrique, plus grand que le premier.

Un avantage est d'éviter la troncature d'intensités de couleurs et donc l'apparition de défauts sur l'image de sortie.

Le procédé qui vient d'être décrit dans ses différents modes de réalisation est avantageusement mis en œuvre par un dispositif de traitement d'au moins une image numérique en vue de sa restitution sur un dispositif d'affichage, ladite image comprenant des éléments d'image, un élément d'image étant associé à des informations de couleur représentées dans un premier espace colorimétrique comprenant une composante de luminance séparée de composantes de chrominance, ladite composante de luminance ayant une valeur comprise dans un premier intervalle de valeurs prédéterminé, ledit dispositif d'affichage étant apte à restituer des valeurs de composantes de luminance des éléments d'image comprises dans un deuxième intervalle de valeurs prédéterminé, de longueur supérieure à celle du premier intervalle, ledit dispositif comprenant une machine de calcul reprogrammable ou une machine de calcul dédiée, apte à et configurée pour :

- Déterminer une information représentative d'un niveau de luminosité globale de l'image, perçu par un observateur, à partir des valeurs de la première composante de luminance des éléments de l'image;

- Calculer un exposant d'expansion en fonction de l'information de niveau global de luminosité déterminée ;

- Transformer les premières composantes de luminance des éléments de l'image en deuxième composantes de luminance, comprenant pour un élément de l'image, le calcul d'une valeur intermédiaire de luminance par application de l'exposant d'expansion calculé à la première valeur de composante de luminance et la multiplication de la valeur intermédiaire calculée par la longueur du deuxième intervalle de valeurs de luminance prédéterminées

Un tel dispositif est remarquable en ce que l'exposant d'expansion calculé est une fonction décroissante de l'information de niveau global de luminosité déterminée.

Corrélativement, l'invention concerne aussi un équipement terminal comprenant un récepteur apte à et configuré pour recevoir une séquence d'images numériques par l'intermédiaire d'un réseau de communication et un émetteur apte à et configuré pour transmettre la séquence d'images à un dispositif d'affichage apte et configuré pour la restituer, caractérisé en ce qu'il comprend un dispositif de traitement d'au moins une image numérique selon l'invention.

Cet équipement terminal peut être un ordinateur personnel, un boîtier décodeur TV, un téléviseur numérique etc.

L'invention concerne encore un programme d'ordinateur comportant des instructions pour la mise en œuvre des étapes d'un procédé tel que décrit précédemment, lorsque ce programme est exécuté par un processeur.

L'invention concerne aussi un programme d'ordinateur comportant des instructions pour la mise en œuvre des étapes d'un procédé de traitement d'une image numérique tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à un support d'enregistrement ou médium de stockage, lisible par un processeur, intégrés ou non au dispositif de traitement d'une image numérique selon l'invention, éventuellement amovible, mémorisant respectivement un programme d'ordinateur mettant en œuvre un procédé de traitement, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente de façon schématique une chaîne de traitement d'une image ou d'une séquence d'image d'entrée au format SDR en vue de fournir une image respectivement une séquence d'images de sortie au format HDR ;

- la figure **2** présente de façon schématique les étapes d'un procédé de traitement d'une image numérique selon l'invention ;

- la figure **3** détaille l'étape de détermination d'une information représentative d'un niveau global de luminosité selon un mode de réalisation de l'invention ;

- les figures **4A** et **4B** présentent des exemples de fonctions décroissantes de l'information de niveau global de luminosité selon deux modes de réalisation de l'invention ;

- la figure **5** détaille les étapes de calcul d'un exposant d'expansion et de dérivation des composantes de couleur selon un premier mode de réalisation de l'invention ;

- la figure **5A** détaille les étapes de calcul d'un exposant d'expansion et de dérivation des composantes de couleur selon un deuxième mode de réalisation de l'invention ;

- les figures **6A à 6D** présente des diagrammes de chromaticité de l'image d'entrée et de l'image de sortie selon le premier et le deuxième mode de réalisation de l'invention ;

- la figure **7** présente des exemples de classes de styles d'éclairage des images d'entrées définies en fonction de leur luminosité et de leur contraste ;

- les figures **8A à 8E** présentent des exemples de courbes d'exposant d'expansion obtenus par le procédé de traitement selon l'invention pour des images d'entrées appartenant à des classes de styles d'éclairage prédéterminées ;

- la Figure **9** présente de façon comparée des exemples d'images de sortie obtenues après traitement selon l'invention et selon deux solutions de l'art antérieur ;

- la figure **10** présente de façon comparée les résultats de tests subjectifs réalisés sur un ensemble d'images avec le procédé de traitement selon l'invention et deux solutions de l'art antérieur ; et

- la figure **11** présente de façon schématique un exemple de structure matérielle d'un dispositif de traitement d'une image numérique selon un mode de réalisation de l'invention.

## 7. Description d'un mode de réalisation particulier de l'invention

Pour rappel, un objectif de l'invention est de proposer une méthode pour étendre la gamme d'intensités de couleurs d'une image d'entrée conforme à un format standard en vue de sa restitution sur un dispositif d'affichage disposant d'une gamme d'intensités de couleurs plus étendue. Le principe général de l'invention repose sur la détermination d'une information représentative d'un niveau global de luminosité de l'image tel que perçu par un observateur et sur l'application aux intensités de l'image d'un exposant d'expansion, exprimé comme une fonction décroissante du niveau global de luminosité de l'image.

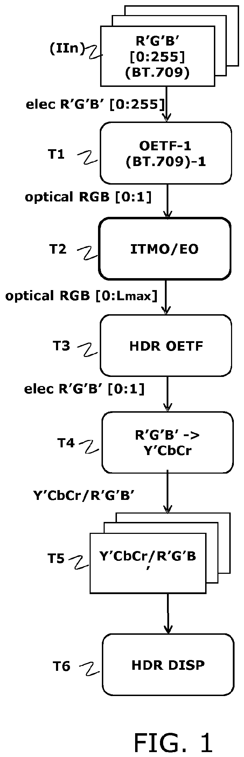

En relation avec la Figure **1,** on considère une chaîne de traitement d'une séquence d'images d'entrée $(II_n)$ au format SDR, avec n entier compris entre 0 et N, avec N entier non nul, en vue de son affichage au format HDR.

Les images de la séquence d'entrée sont bidimensionnelles (2D). Leurs éléments sont des pixels. Bien sûr, l'invention n'est pas limitée à cet exemple et s'applique aussi à des images tridimensionnelles (3D) ou multivues, dont les éléments sont des voxels.

Les images de cette séquence peuvent prendre différentes dimensions spatiales telles que par exemple des images SD (pour « Standard Definition », en anglais, HD (pour High definition », en anglais), UHD (pour « Ultra High Definition », en anglais), 4K, qui correspond à quatre fois la définition d'une image HD et 8K, qui correspond à huit fois la définition d'une image HD. La séquence d'entrée peut présenter des valeurs de fréquence (pour « frame rate », en anglais) variées parmi les valeurs suivantes de 24, 25, 30, 50, 60, 120 etc. Les intensités de couleur de ses éléments d'images, peuvent être codées sur une profondeur de bits (« bit depth », en anglais) par exemple égale à 8, 10, 12 ou encore 16 bits.

On suppose que cette séquence d'images a préalablement été obtenue soit sous forme brute (pour « raw », en anglais) directement en sortie d'un module d'acquisition, tel que par exemple une caméra vidéo, soit sous forme décompressée en sortie d'un décodeur qui l'avait reçue par l'intermédiaire d'un réseau de communication.

Par exemple, la séquence d'images d'entrée $(II_n)$ est au format R'G'B' (pour « Red Green Blue », en anglais)..., tel que spécifié dans la norme BT.709 qui définit les valeurs des paramètres des normes de TVHD pour la production et l'échange international de programmes audiovisuels. Les informations de couleurs sont exprimées selon trois composantes R', G', B' qui prennent chacune des valeurs comprises entre 0 et 255.

Bien sûr, l'invention ne se restreint pas à cet espace colorimétrique et peut aussi bien traiter des images d'entrée conformes à d'autres formats tel que BT.2020, BT.601, DCI-P3, etc.

Ces informations de couleurs R'G'B' correspondent à un codage informatique ou électrique des couleurs des éléments d'image. Une opération de conversion électrique optique est réalisée en T1 pour rétablir les intensités optiques des couleurs de l'image. Les intensités optiques RGB ainsi obtenues prennent des valeurs comprises entre 0 et 1.

Ces intensités optiques RGB sont présentées, en T2 à un module ITMO (pour «Inverse Tone Mapping Operator », en anglais) qui a pour fonction d'étendre la gamme de valeurs des intensités de couleur d'un premier intervalle [0 :1] à un deuxième intervalle de valeurs [0 :Lmax] où Lmax représente la longueur du deuxième intervalle, Lmax étant un entier supérieur à 1.

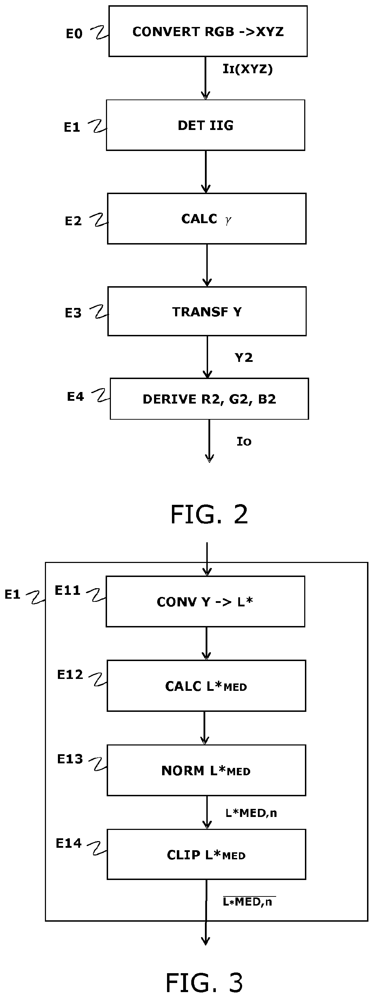

Ce module ITMO met en œuvre le procédé selon l'invention qui va être présenté ci-après en relation avec la Figure 2. A la sortie de ce module, la séquence d'images produite est au format optique RGB avec des intensités comprises entre 0 et $L_{max}$.

Chaque image de la séquence est soumise en T3 à une opération inverse de conversion optique électrique de façon à obtenir en sortie une séquence d'images dont les intensités de couleur correspondent à un codage informatique exploitable pour un dispositif d'affichage, tel qu'un téléviseur. Par exemple, la conversion mise en œuvre fournit des intensités de couleur au format Y'$C_b$$C_r$ qui décompose les intensités de couleurs en une composante de luminance Y' séparée des composantes de chrominance $C_b$, $C_r$. Ce format Y'$C_b$$C_r$ est une manière de représenter l'espace colorimétrique en vidéo qui est bien adaptée aux problématiques de transmission. Ces composantes sont codées sur 10 bits. En variante, une conversion supplémentaire fournit en T4 une séquence d'images de sortie au format R'G'B', codée sur au moins 10 bits.

La séquence d'images obtenue est transmise en T5 à un dispositif d'affichage, tel que par exemple un téléviseur numérique HDR par exemple conforme à la norme ST2084 ou STD-B67.

En relation avec la Figure **2,** on décrit maintenant les étapes du procédé de traitement d'une image numérique selon un mode de réalisation de l'invention.

On suppose que les intensités de couleur optiques de l'image d'entrée sont exprimées au format RGB.

Au cours d'une première étape E0, on convertit les intensités de couleur de l'image d'entrée dans un espace colorimétrique qui comprend une composante Y de luminance et des composantes X et Z de chrominance. On comprend que dans cet espace, on sépare une information représentative d'une luminosité de l'image en chacun de ses points, des informations dites de chrominance qui en définissent la couleur.

En E1, on détermine une information représentative d'un niveau global de luminosité de l'image d'entrée, tel que perçu par le système visuel d'un observateur.

Selon un premier mode de réalisation de l'invention, l'information déterminée est la clé k de l'image telle que définie par Masia.

Selon un deuxième mode de réalisation de l'invention, décrit en relation avec la Figure **3,** on détermine l'information de niveau global de luminosité d'une autre manière, définie ci-dessous :

En E11, on convertit la composante de luminance Y en une autre composante de luminance L*, dite de clarté, d'un espace colorimétrique dit CIEL*a*b*. La composante L* de clarté peut prendre des valeurs comprises entre 0 (noir) et 100 (blanc). Il s'agit d'un espace colorimétrique pour les couleurs de surface, défini par la Commission internationale de l'éclairage. (CIE), en même temps que l'espace colorimétrique CIE L*u*v* pour les couleurs de lumière. Fondé sur les évaluations du système CIE XYZ, il a été conçu pour figurer plus fidèlement les écarts entre les couleurs perçues par la vision humaine.

Dans ce modèle, trois grandeurs caractérisent les couleurs, la clarté L*, dérivée de la luminance (Y) de l'évaluation XYZ, et deux paramètres *a\* et b\*,* qui expriment l'écart de la couleur par rapport à celle d'une surface grise de même clarté, comme la chrominance d'une séquence d'images.

Au cours d'une étape E12, on calcule la valeur médiane $L_{med}^{*}$ de la composante de clarté L* sur l'ensemble des éléments de l'image d'entrée IIn.

On suppose que l'image II$_n$ compte M éléments d'image, avec M entiers non nuls.

On calcule par exemple la valeur médiane en triant les valeurs des composantes de clarté des éléments de l'image dans l'ordre croissant, la valeur médiane $L_{med}^{*}$ correspondant à la position (M+1)/2.

Au cours d'une étape E13, on normalise la valeur médiane obtenue, de façon à ce que sa valeur soit comprise entre 0 et 1. On a :

$$L_{med,n}^{*} = \frac{L_{med}^{*}}{100} \qquad (4)$$

En E14, on restreint (pour « clipping », en anglais) les valeurs possibles pour la valeur médiane de la clarté normalisée, en excluant les valeurs extrêmes de l'intervalle [0,1]. Le nouvel intervalle de valeurs possibles est [0.05, 0;95].

On obtient donc une information représentative d'un niveau global de luminosité de l'image d'entrée égale à la valeur médiane normalisée et « clippée » de la composante de clarté :

$$ILG = \overline{L^*_{med,n}} \qquad (5)$$

En relation avec la Figure **2,** l'étape suivante E2 du procédé de traitement selon l'invention calcule un coefficient d'expansion y fonction de l'information représentative d'un niveau de luminosité de l'image d'entrée ILG. Ce coefficient d'expansion est destiné à être appliqué à la composante de luminance $Y_1$ de l'image d'entrée IIn. Selon l'invention, le coefficient d'expansion y est calculé comme une fonction décroissante de l'information ILG.

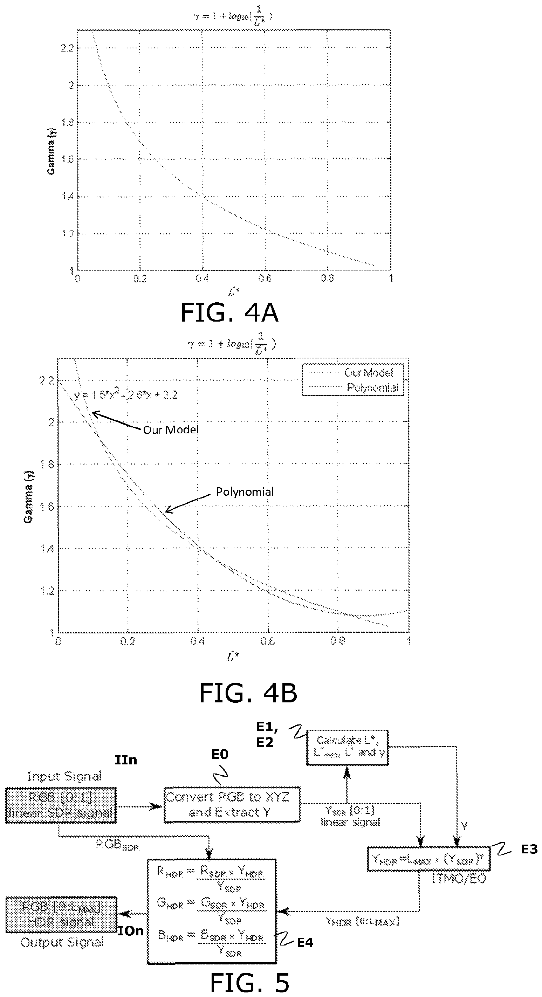

Selon un premier mode de réalisation de l'invention, présenté en relation avec la Figure **4A,** le coefficient d'expansion y est calculé comme une fonction polynomiale décroissante de l'information ILG. Par exemple, on définit le coefficient d'expansion y comme suit :

$$\gamma = \alpha . ILG^2 - \beta . ILG + \rho \qquad (6)$$

avec $\alpha$=1.5, $\beta$=2.6 et $\rho$ = 2.2

Selon un deuxième mode de réalisation de l'invention, présenté en relation avec la Figure **4B,** le coefficient d'expansion y est une calculé comme une fonction logarithmique de l'inverse de l'information de luminosité ILG de l'image d'entrée :

$$\gamma = 1 + \log_{10} \frac{1}{ILG} \qquad (7)$$

Dans ces deux exemples, l'information ILG est choisie égale à $\overline{L^*_{med,n}}$. Bien sûr, l'invention ne se limite pas à ce cas particulier. On peut envisager d'autres façons de calculer l'information ILG, par exemple à partir de la clé de l'image k.

Un avantage de cette fonction est qu'elle correspond bien au modèle de perception du système visuel humain. En outre, elle est simple à calculer.

Bien sûr, l'invention ne se limite pas à l'utilisation de ces deux exemples. D'autres modèles de courbes peuvent être utilisés.

Au cours d'une étape E3, on transforme la composante de luminance $Y_1$ de l'image d'entrée par application du coefficient d'expansion y :

$$Y_1' = Y_1^{\gamma} \qquad (8)$$

avec

$$\gamma = 1 + \log_{10} \frac{1}{ILG}$$

et on multiplie, pour chaque élément de l'image d'entrée IIn, la valeur de luminance Y par l'amplitude de l'intervalle de valeurs de luminances du dispositif d'affichage $L_{max}$.

$$Y_2 = L_{max} . Y_1' \qquad (9)$$

Par exemple, avec un standard d'écran HDR tel que ST2084, si le niveau maximal de luminosité de l'écran est de 1000 nits ou cd/m², alors $L_{max}$ vaut 1000.

En E4, on transforme les premières composantes de chrominance C1 de l'image en deuxièmes composantes C2.

Lorsque les premières composantes C1 s'expriment sous la forme de trois valeurs d'intensité lumineuse R1, G1, B1 de l'espace colorimétrique RGB, on obtient trois deuxièmes composantes R2, G2, B2.

Plusieurs modes de réalisation sont envisagés.

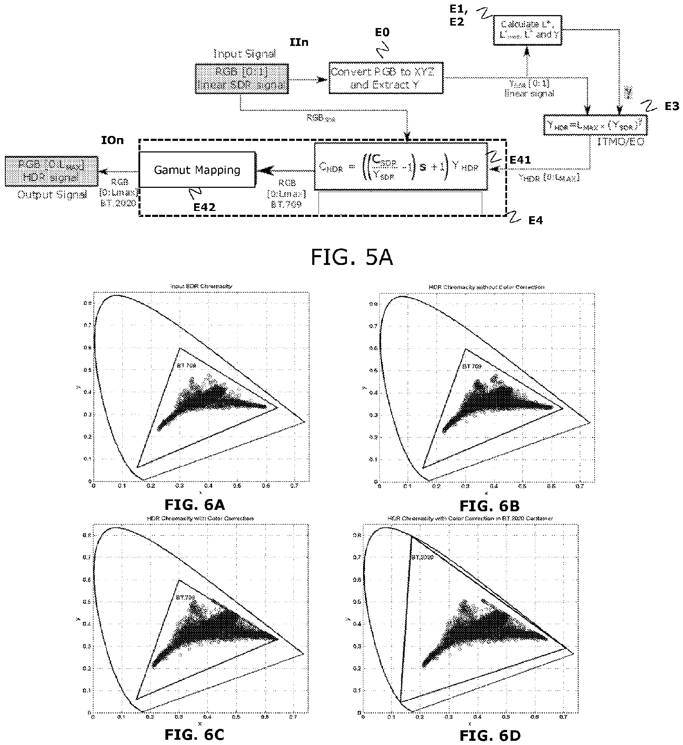

Sur la Figure **5,** on a représenté les étapes du procédé de traitement d'une image d'entrée ($II_n$) selon l'invention, lorsque l'image d'entrée est au format standard SDR et le dispositif d'affichage est configuré pour restituer des images ($IO_n$) au format HDR.

Selon un premier mode de réalisation, illustré par la Figure **5,** on multiplie les premières composantes de chrominance C1 par un coefficient d'expansion proportionnel à l'expansion appliquée à la luminance de l'image, par exemple égal au ratio $Y_2/Y_1$, de la façon suivante :

$$C_2 = \frac{C_1 . Y2}{Y_1} \qquad (10)$$

Dans l'espace colorimétrique RGB, on obtient :

$$R_2 = \frac{R_1 . Y2}{Y_1} \qquad (11)$$

$$G_2 = \frac{G_1 . Y2}{Y_1} \qquad (12)$$

$$B_2 = \frac{B_1 . Y2}{Y_1} \qquad (13)$$

Un avantage de ce mode est sa simplicité.

On obtient ainsi une image de sortie ($IO_n$) dont les intensités de couleurs prennent une gamme de valeurs plus étendue et adaptée à l'amplitude offerte par le dispositif d'affichage.

En synthèse des couleurs, on désigne par gamut, ou gamut de couleur la partie de l'ensemble des couleurs qu'un certain type de matériel, tel qu'un écran de téléviseur ou un moniteur d'ordinateur permet de reproduire. Le gamut dépend des couleurs primaires employées pour synthétiser les couleurs. On le représente souvent comme une aire sur un diagramme de chromaticité par un polygone qui joint les points représentatifs de ces primaires. La Figure **6A** présente le nuage des intensités de couleurs prises par l'image d'entrée dans le gamut selon la recommandation BT709 adaptée à la TVHD (pour « Téléviseur Haute Définition »). La Figure **6B** présente celui de l'image de sortie obtenue par le premier mode de réalisation de l'invention qui vient d'être décrit en relation avec la Figure **5.**

Selon un deuxième mode de réalisation, illustré par la Figure **5A,** l'étape E4 comprend une sous-étape E41 de correction des composantes de couleurs, qui consiste à appliquer aux premières composantes de chrominance une fonction de correction qui n'est plus directement proportionnelle au ratio Y2/Y1 entre luminance de sortie et luminance d'entrée, comme dans le mode de réalisation précédent. Selon ce deuxième mode, la fonction de correction qui s'applique aux premières composantes de luminance, dépend des premières et deuxièmes composantes de luminance et d'un facteur de saturation s, qui est un réel strictement supérieur à 1, selon l'expression suivante :

$$C_2 = \left( \left( \frac{C_1}{Y_1} - 1 \right) . s + 1 \right) Y_2 \qquad (14)$$

Dans l'espace colorimétrique RGB, on obtient :

$$R_2 = \left( \left( \frac{R_1}{Y_1} - 1 \right) . s + 1 \right) Y_2 \qquad (15) \qquad G_2 = \left( \left( \frac{G_1}{Y_1} - 1 \right) . s + 1 \right) Y_2$$

$$(16)$$

$$B_2 = \left( \left( \frac{B_1}{Y_1} - 1 \right) . s + 1 \right) Y_2 \qquad (17)$$

Par exemple, le facteur de saturation s est choisi égal à 1.25.

Un avantage de cette correction est qu'en saturant les intensités des composantes de couleur, elle permet d'obtenir un rendu de couleurs plus intense.

Avantageusement, l'étape E4 comprend en outre une sous-étape E42 de conversion des deuxièmes composantes de chrominance d'un premier espace colorimétrique, plus grand que le premier.

Une conversion d'un gamut A vers un gamut B peut se faire par transformation matricielle de la façon suivante :

$$\begin{bmatrix} R_2' \\ G_2' \\ B_2' \end{bmatrix}_{Gamut\ B} = \begin{bmatrix} a_1 & a_2 & a_3 \\ a_4 & a_5 & a_6 \\ a_7 & a_8 & a_9 \end{bmatrix} \cdot \begin{bmatrix} R_2 \\ G_2 \\ B_2 \end{bmatrix}_{Gamut\ A} \qquad (18)$$

Par exemple, les intensités R2, G2, B2 obtenues, qui appartiennent à un premier espace colorimétrique, par exemple conforme à la recommandation BT709, sont converties en intensités R2',G2',B2' dans un deuxième espace colorimétrique tel que le nouvel espace selon la recommandation BT2020 créée récemment pour les nouveaux écrans de télévisions TVUHD (pour « téléviseur Ultra Haute Définition »).

Dans ce cas, la conversion du gamut selon la recommandation BT.709 vers le gamut selon la recommandation BT.2020 se fait par application de la matrice suivante, comme spécifié dans la recommandation BT.2087 :

$$\begin{bmatrix} R_2' \\ G_2' \\ B_2' \end{bmatrix}_{BT.2020} = \begin{bmatrix} 0{,}6274 & 0{,}3293 & 0{,}0433 \\ 0{,}0691 & 0{,}9195 & 0{,}0114 \\ 0{,}0164 & 0{,}0880 & 0{,}8956 \end{bmatrix} \cdot \begin{bmatrix} R_2 \\ G_2 \\ B_2 \end{bmatrix}_{BT.709} \qquad (19)$$

Un avantage de cette conversion est qu'elle permet, du fait des dimensions accrues du polygone du gamut, de garantir que les intensités de couleur transformées sont situées à distance de ses frontières dans le deuxième espace colorimétrique, ce qui permet d'éviter les effets de coupure (pour « clipping », en anglais) des intensités de couleurs sur l'image de sortie.

La Figure **6C** présente un diagramme de chromaticité de l'image de sortie obtenue à l'issue de l'étape E41 de correction des couleurs selon le deuxième mode de réalisation. On note que, du fait de la correction, la gamme d'intensités de couleurs est plus étendue sur la Figure **6C** que sur la Figure **6B,** ce qui se traduit, lors de la restitution de l'image de sortie, par un rendu plus intense.

La Figure **6D** présente un diagramme de chromaticité de l'image de sortie obtenue à l'issue de l'étape E42 de changement d'espace colorimétrique. On constate que le changement d'espace colorimétrique permet d'éloigner le nuage de valeurs d'intensités des frontières du triangle de gamut, ce qui a pour effet d'éviter toute troncature des intensités de couleurs aux bords du triangle et donc l'apparition de défauts de rendu sur l'image de sortie.

Pour une séquence d'images, on répète les étapes E1 à E4 pour chaque image.

L'invention qui vient d'être présentée a été testée sur un ensemble représentatif de séquences d'images appartenant à des styles ou classes d'éclairage variées.

On désigne par style d'éclairage ou de lumière d'une image (pour « lighting style », en anglais), les conditions de luminosité et de contraste choisies par un artiste pour créer une image, photographie ou séquence vidéo. Ces conditions contribuent à conférer à l'image une ambiance particulière. La notion de style est connue et très utilisée en photographie, à la télévision, comme au cinéma. On recense notamment les trois classes suivantes :

- le ton moyen MK (pour « Medium-Key lighting », en anglais) est un style de prises d'images associant un contraste moyen à une luminosité modérée. La plupart des contenus images et vidéos entre dans cette catégorie.
- Le ton foncé LK (pour « Low-Key lighting », en anglais) est un style de prise d'images volontairement sombre, donc présentant une faible luminosité associée à un fort contraste. Le style low key intervient dans plusieurs effets tels que le clair-obscur Contrairement à l'éclairage standard basé sur trois sources lumineuses, la technique du Low-Key ne fait généralement intervenir qu'une seule source.
- Le ton clair HK (pour « High-Key lighting », en anglais) est un style de prise d'images associant une luminosité élevée à un faible contraste pour exprimer une ambiance légère. C'est un style très utilisé dans le domaine de la mode et de la publicité.

En prenant en compte les deux dimensions données par la luminance et le contraste, les inventeurs proposent une classification 2D comprenant les deux styles supplémentaires suivants :

- le ton sombre DK (pour « Dark-Key lighting », en anglais) est un style de prise d'images volontairement sous-exposées, donc présentant une faible luminosité, qui est combinée avec un faible contraste. Il est particulièrement prisé pour les scènes de nuit, instaurer une ambiance inquiétante, rehausser le suspense de films d'horreur ou de polars ;

- le ton brillant BK (pour « Bright-Key lighting », en anglais) est un style de prise d'images associant un fort niveau de contraste à une luminosité élevée. Ce style concerne communément les prises de vue extérieures les jours de ciel clair et ensoleillés.

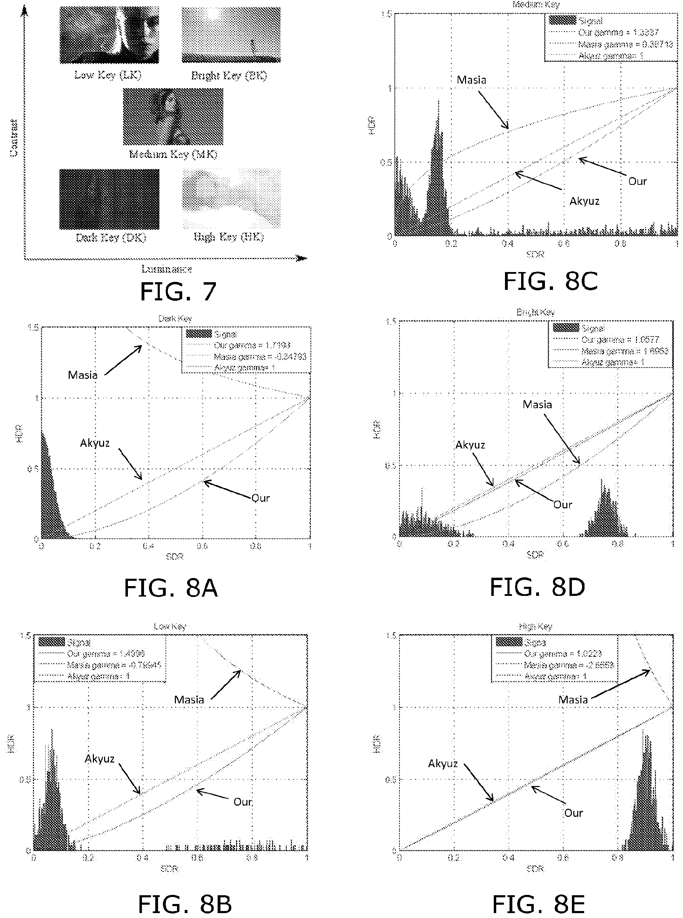

En relation avec la Figure **7,** on a positionné respectivement les cinq styles d'éclairage qui viennent d'être décrits sur un diagramme, en fonction d'informations représentatives de niveaux globaux de luminosité et de contraste, tels que perçus par un observateur. On constate que les classes LK et DK ont des niveaux de luminosité comparables et se distinguent l'une de l'autre par leur niveau de contraste. Il en est de même pour les classes HK et BK.

En relation avec les Figures **8A** à **8E, 9** et **10,** on présente maintenant les résultats obtenus par l'invention. Les figures **8A** à **8E** comparent, pour les cinq classes d'images, les courbes des valeurs de luminance étendues $Y_2$ de l'image de sortie en fonction de celles $Y_1$ de l'image d'entrée, respectivement obtenues par l'invention et les méthodes de Akyuz et Masia, déjà décrites. Pour rappel, la méthode d'Akyuz utilise un exposant d'expansion égal à 1 tandis que la méthode de Masia exploite un exposant exprimé comme une fonction affine de la clé de l'image.

Pour l'image de la Figure **8A,** appartenant à la classe de style Dark Key, l'exposant d'expansion y calculé par l'invention vaut 1,72 et celui calculé par Masia vaut -0.35. Avec la méthode d'Akyuz, l'expansion est linéaire, si bien que toutes les luminances sont augmentées de la même façon.

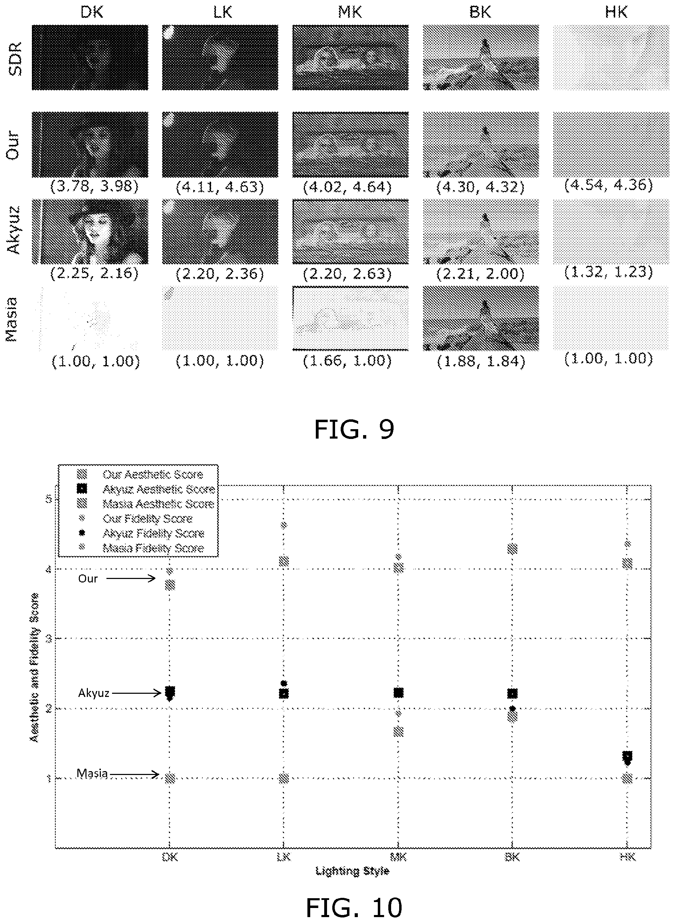

Le coefficient calculé par Masia est négatif, ce qui a pour effet de saturer les valeurs de luminance $Y_2$. En relation avec la Figure **9,** qui présente une image de la séquence de sortie obtenue par chacune des méthodes et l'image d'origine correspondante, ainsi que des scores d'esthétique et de fidélité attribués par des observateurs, on vérifie que l'image obtenue par la méthode de Masia est très blanche et a perdu tout contraste. L'image produite par la méthode de Akyuz est de qualité correcte mais le style d'éclairage originel a été dénaturé.

Pour l'image de la Figure **8B,** appartenant à la classe de style Low Key, l'exposant d'expansion y calculé par l'invention vaut 1,5 et celui calculé par Masia vaut -0.80. Les mêmes constats s'appliquent pour les images produites par Akyuz et Masia.

Pour l'image de la Figure **8C,** appartenant à la classe de style Medium Key, l'exposant d'expansion y calculé par l'invention vaut 1,34 et celui calculé par Masia vaut 0.39. La courbe obtenue par la méthode selon l'invention se situe en deçà de la droite d'Akyuz. Elle étire donc moins les valeurs de luminance intermédiaires que le fait Akyuz. Ceci se vérifie sur la Figure **8,** qui montre que la version de l'image MK étendue par l'invention paraît globalement moins exposée que la version produite par Akyuz. L'image produite par Masia est surexposée et le rendu est peu naturel.

Pour l'image de la Figure **8D,** appartenant à la classe de style Bright Key, l'exposant d'expansion y calculé par l'invention vaut 1,06 et celui calculé par Masia vaut 1,7. Le résultat obtenu par Akyuz est trop éclairé. Celui obtenu par Masia est trop contrasté. En relation avec la Figure **8,** les scores obtenus par Masia sont nettement moins bons que ceux de Akyuz et ceux de l'invention, notamment à cause d'un battement entre les images de la séquence de sortie.

Pour l'image de la Figure **8E,** appartenant à la classe de style High Key, l'exposant d'expansion y calculé par l'invention vaut 1,02 et celui calculé par Masia vaut -2.65. La courbe de l'invention est très proche de la droite d'Akyuz, mais légèrement en deçà. La Figure **8** met en évidence une surexposition plus importante de la version produite par Akyuz que celle de l'invention. En relation avec la Figure **9,** l'image produite par Masia est très blanche, dépourvue de tout contraste..

De façon générale, on constate que la méthode de Masia a tendance à saturer les valeurs de luminance sur toute la gamme de valeurs prises par l'image d'entrée, ce qui aura pour effet de donner une impression de sur exposition et de perte de contraste.

La méthode d'Akyuz amplifie linéairement les luminances sur toute la gamme de valeurs. Le rendu des images est acceptable, mais le style originel des images a été dénaturé.

Ces résultats mettent en évidence les bons résultats obtenus par l'invention qui restitue fidèlement les styles d'éclairage des images qu'elle traite.

En relation avec la Figure **10,** on présente les scores moyens attribués par un ensemble d'observateurs aux images produites par les trois méthodes testées. On distingue un score d'esthétique, issu d'un test sans référence et un score de fidélité, issu d'un test avec référence. On constate que les scores obtenus par le procédé de traitement selon l'invention sont toujours supérieurs à ceux des autres méthodes, que ce soit d'un point de vue de l'esthétique ou de la fidélité.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

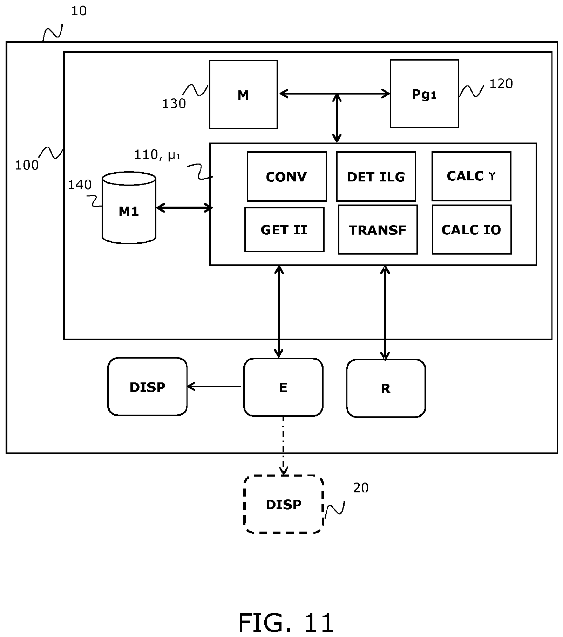

En relation avec la figure **11,** on présente maintenant un exemple de structure simplifiée d'un dispositif 100 de codage d'une image numérique selon l'invention. Le dispositif 100 met en œuvre le procédé de codage selon l'invention qui vient d'être décrit en relation avec la Figure **1.**

Cette figure **11** illustre seulement une manière particulière, parmi plusieurs possibles, de réaliser l'algorithme détaillé ci-dessus, en relation avec la figure **2.** En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Par exemple, le dispositif 100 comprend une unité de traitement 110, équipée d'un processeur µ1, et pilotée par un programme d'ordinateur Pg1 120, stocké dans une mémoire 130 et mettant en œuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend une machine de calcul reprogrammable ou une machine de calcul dédiée, apte à et configurée pour :

- obtenir une image d'entrée GET II ;

- convertir CONV les intensités de couleur RGB de l'image d'entrée dans un espace colorimétrique qui comprend une composante Y de luminance et des composantes X et Z de chrominance ;

- Déterminer DET ILG une information représentative d'un niveau global de luminosité de l'image, perçu par un observateur, à partir des valeurs de la première composante de luminance des éléments de l'image;

- Calculer CALC un exposant d'expansion y en fonction de l'information de niveau global de luminosité déterminée ;

- Transformer TRANSF les premières composantes de luminance des éléments de l'image en deuxième composantes de luminance, comprenant pour un élément de l'image, le calcul d'une valeur intermédiaire de luminance par application de l'exposant d'expansion calculé à la première valeur de composante de luminance et la multiplication de la valeur intermédiaire calculée par la longueur du deuxième intervalle de valeurs de luminance prédéterminées.

Selon l'invention, l'exposant d'expansion y calculé est une fonction décroissante de l'information de niveau global de luminosité déterminée.

Avantageusement, la machine de calcul est configurée pour mettre en œuvre les modes de réalisation de l'invention qui viennent d'être décrits en relation avec les Figures **2** à **6.**

En particulier, elle est configurée pour mettre en œuvre une transformation des premières composantes de chrominance en deuxièmes composantes de chrominance selon le premier ou le deuxième modes de réalisation décrits en relation avec les Figures **5** et **5A.**

Le dispositif 100 comprend en outre une unité $M_1$ 140 de stockage, telle qu'une mémoire ou un buffer, apte à stocker par exemple la séquence d'images d'entrée, le coefficient d'expansion y calculé et les valeurs intermédiaires de luminance, et/ou la séquence d'images de sortie.

Ces unités sont pilotées par le processeur µ1 de l'unité de traitement 110.

De façon avantageuse, un tel dispositif 100 peut être intégré à un équipement terminal d'utilisateur TU, par exemple un ordinateur, un boîtier décodeur TV (pour « set top box », en anglais), un téléviseur numérique. Le dispositif 100 est alors agencé pour coopérer au moins avec les modules suivants du terminal TU :

- un module E/R d'émission/réception de données, par l'intermédiaire duquel un signal comprenant des données codées représentatives de la séquence d'images d'entrée est reçu d'un réseau de télécommunications, par exemple un réseau radio, filaire ou hertzien ; et/ou
- un module d'acquisition de la séquence d'images d'entrée, tel que par exemple une caméra vidéo, par exemple via un câble HDMI.
- un dispositif d'affichage, configuré pour restituer des images ayant une gamme d'intensités de couleur étendue, par exemple un téléviseur HDR professionnel de type Sony ® BVM-X300 OLED, équipé de fonctions de transfert SLoq3 et ST2084. Ce dispositif est conforme aux standards de colorimétrie BT.709 et BT.2020. Il offre une luminosité maximale de 1000 nits.

Grâce à ses bonnes performances et à sa simplicité de mise en œuvre, l'invention qui vient d'être décrite permet plusieurs usages. Sa première application est la conversion de contenus vidéo au format SDR en une version affichable sur un dispositif de restitution HDR. Par exemple, elle peut être mise en œuvre à réception d'un contenu vidéo diffusé en temps réel (« live », en anglais) au format SDR, comme post traitement, en vue de son affichage de la séquence d'images sur un écran HDR.

Pour la production de contenus TV en temps réel mettant en œuvre plusieurs modules d'acquisition, SDR et HDR, elle peut être utilisée pour convertir à la volée un contenu SDR en HDR avant son mixage avec des contenus HDR. Elle peut aussi trouver son intérêt dans la post production cinématographique.

Enfin, l'invention peut être mise en œuvre, en tout point d'une chaîne de transmission pour transcoder un contenu transmis au format HDR BT.709 dans un format HDR, tel que spécifié par le standard ST2084 ou STD-B67.

**Revendications**

**1.** Procédé de traitement d'au moins une image numérique ($II_n$) en vue de sa restitution sur un dispositif d'affichage (20), ladite image comprenant des éléments d'image, un élément d'image étant associé à des informations de couleur représentées dans un premier espace colorimétrique comprenant une première composante de luminance ($Y_1$) et des premières composantes de chrominance, ladite première composante de luminance ayant une valeur comprise dans un premier intervalle de valeurs prédéterminées, ledit dispositif d'affichage étant apte à restituer des valeurs de composante de luminance des éléments d'image comprises dans un deuxième intervalle de valeurs prédéterminées, de longueur supérieure à celle du premier intervalle, ledit procédé comprenant les étapes de :

- Détermination (E1) d'une information représentative d'un niveau global de luminosité (ILG) de l'image perçu par un observateur, à partir des valeurs de la première composante de luminance des éléments de l'image ;
- Calcul (E2) d'un exposant d'expansion ($\gamma$) en fonction de l'information de niveau global de luminosité déterminée ;
- Transformation (E3) des premières composantes de luminance des éléments de l'image en deuxièmes composantes de luminance, comprenant pour un élément de l'image, le calcul d'une valeur intermédiaire de luminance par application de l'exposant d'expansion calculé à la première valeur de composante de luminance et la multiplication de la valeur intermédiaire calculée par la longueur du deuxième intervalle de valeurs prédéterminées,

**caractérisé en ce que** l'exposant d'expansion calculé est une fonction décroissante de l'information de niveau global de luminosité déterminée permettant que la valeur de l'exposant d'expansion diminue lorsque le niveau global de luminosité augmente.

**2.** Procédé de traitement d'au moins une image numérique en vue de sa restitution sur un dispositif d'affichage selon la revendication **1, caractérisé en ce que** l'exposant calculé est proportionnel au logarithme de l'inverse de l'information représentative d'un niveau global de luminosité de l'image.

**3.** Procédé de traitement d'au moins une image numérique en vue de sa restitution sur un dispositif d'affichage selon la revendication **2, caractérisé en ce que** l'étape de détermination (EI) d'un niveau global de luminosité comprend l'obtention (E12) d'une valeur médiane de la composante de luminance de l'image, et la normalisation de la valeur médiane obtenue, et **en ce que** l'information représentative d'un niveau global de luminosité de l'image est proportionnelle à la valeur médiane obtenue normalisée.

**4.** Procédé de traitement d'au moins une image numérique en vue de sa restitution sur un dispositif d'affichage selon la revendication précédente, **caractérisé en ce que** l'étape de détermination (E1) d'une information représentative d'un niveau global de luminosité comprend en outre une étape préalable (E11) de conversion de la première composante de luminance du premier espace colorimétrique en une composante de luminance, dite de clarté, d'un deuxième espace colorimétrique, préalable à l'étape de calcul de l'exposant d'expansion, et **en ce que** la valeur médiane est obtenue à partir de la composante de clarté.

**5.** Procédé de traitement d'au moins une image numérique en vue de sa restitution sur un dispositif d'affichage selon l'une des revendications **3** ou **4, caractérisé en ce que** le procédé comprend une étape de normalisation (E13) de la valeur médiane entre 0 et 1, préalable à l'étape de calcul de l'exposant d'expansion, et **en ce qu'**il comprend une étape (E14) de correction de la valeur médiane normalisée, une valeur comprise entre 0 et a, nombre réel positif non nul inférieur à 1, étant mise à la valeur a et une valeur comprise entre b et 1 , avec b nombre réel supérieur à a et inférieur à 1, étant mise à la valeur b.

**6.** Procédé de traitement d'au moins une image numérique en vue de sa restitution sur un dispositif d'affichage selon la revendication précédente, **caractérisé en ce que** l'étape de transformation (E3) met en œuvre les équations suivantes :

$$Y_2 = L_{max}. Y_1^{\gamma}$$

avec

$$\gamma = 1 + log_{10} \frac{1}{\overline{L_{med,n}^*}}$$

où $Y_1$ désigne la première composante de luminance, $Y_2$ la deuxième composante de luminance, $L_{max}$ la longueur du deuxième intervalle de valeurs de luminance, $log_{10}$ le logarithme décimal, y l'exposant d'expansion appliqué à la première composante de luminance Y1 et $\overline{L_{med,n}^*}$ la valeur médiane de luminance normalisée et clippée.

**7.** Procédé de traitement d'au moins une image numérique selon l'une des revendications précédentes, **caractérisé en ce qu'**il comprend une étape (E4) de transformation des premières composantes de chrominance (C1) de l'image en deuxièmes composantes (C2), par application aux premières composantes de chrominance d'un coefficient d'expansion proportionnel à un ratio entre la deuxième composante de luminance et la première composante de luminance, selon l'expression suivante :

$$C_2 = \frac{C_1 . Y2}{Y_1}$$

**8.** Procédé de traitement d'au moins une image numérique selon l'une des revendications 1 à 6, **caractérisé en ce qu'**il comprend une étape (E4) de transformation des premières composantes de chrominance (C1) de l'image en deuxièmes composantes de chrominance (C2), comprenant une sous-étape (E41) de correction de couleurs par application aux premières composantes de chrominance d'une fonction de correction qui dépend de la première et de la deuxième composantes de luminance (Y1, Y2) et d'un facteur de saturation (s), qui est un réel strictement supérieur à 1, selon l'expression suivante :

$$C_2 = \left( \left( \frac{C_1}{Y_1} - 1 \right) . s + 1 \right) Y_2$$

**9.** Procédé de traitement d'au moins une image numérique selon la revendication **8, caractérisé en ce que** l'étape de transformation (E4) comprend une sous-étape (E42) de conversion des deuxièmes composantes de chrominance d'un premier espace colorimétrique vers un deuxième espace colorimétrique, plus grand que le premier.

**10.** Dispositif (100) de traitement d'au moins une image numérique ($II_n$) en vue de sa restitution sur un dispositif d'affichage (20), ladite image comprenant des éléments d'image, un élément d'image étant associé à des informations de couleur représentées dans un premier espace colorimétrique comprenant une composante de luminance ($Y_1$) séparée de composantes de chrominance, ladite composante de luminance ayant une valeur comprise dans un premier intervalle de valeurs prédéterminé, ledit dispositif d'affichage étant apte à restituer des valeurs de composantes de luminance des éléments d'image comprises dans un deuxième intervalle de valeurs prédéterminé, de longueur supérieure à celle du premier intervalle, ledit dispositif comprenant une machine de calcul reprogrammable ou une machine de calcul dédiée, apte à et configurée pour :

    - Déterminer (DET ILG) une information représentative d'un niveau de luminosité globale de l'image, perçu par un observateur, à partir des valeurs de la première composante de luminance des éléments de l'image;
    - Calculer (CALC y) un exposant d'expansion en fonction de l'information de niveau global de luminosité déterminée ;
    - Transformer (TRANSF) les premières composantes de luminance des éléments de l'image en deuxièmes composantes de luminance, comprenant pour un élément de l'image, le calcul d'une valeur intermédiaire de luminance par application de l'exposant d'expansion calculé à la première valeur de composante de luminance et la multiplication de la valeur intermédiaire calculée par la longueur du deuxième intervalle de valeurs de luminance prédéterminées,

**caractérisé en ce que** l'exposant d'expansion (y) calculé est une fonction décroissante de l'information de niveau global de luminosité déterminée permettant que la valeur de l'exposant d'expansion diminue lorsque le niveau global de luminosité augmente.

**11.** Equipement terminal (10) apte à et configuré pour obtenir une séquence d'images numériques et pour transmettre une séquence d'images numériques à un dispositif d'affichage (20) apte et configuré pour la restituer, **caractérisé en ce qu'**il comprend un dispositif (100) de traitement d'au moins une image numérique selon la revendication **10.**

**12.** Produit programme d'ordinateur (Pg$_1$), comprenant des instructions de code de programme pour la mise en œuvre d'un procédé selon l'une quelconque des revendications **1** à **9,** lorsque ledit programme est exécuté sur un ordinateur.

**13.** Médium de stockage lisible par ordinateur et non transitoire, stockant un produit programme d'ordinateur (Pg$_1$) selon la revendication **12.**

**Patentansprüche**

**1.** Verfahren zur Verarbeitung mindestens eines digitalen Bilds (II$_n$) zur Wiedergabe auf einer Anzeigevorrichtung (20), wobei das Bild Bildelemente aufweist, wobei ein Bildelement Farbinformationen zugeordnet ist, die in einem ersten kolorimetrischen Raum dargestellt sind, der eine erste Luminanzkomponente (Y$_1$) und erste Chrominanzkomponenten aufweist, wobei die erste Luminanzkomponente einen in einem ersten Intervall vorbestimmter Werte liegenden Wert aufweist, wobei die Anzeigevorrichtung geeignet ist, Luminanzkomponentenwerte der Bildelemente wiederzugeben, die in einem zweiten Intervall vorbestimmter Werte enthalten sind, das eine größere Länge als die des ersten Intervalls hat, wobei das Verfahren die Schritte

- Bestimmen (E1) einer für ein von einem Beobachter wahrgenommenen Helligkeitsgesamtniveau (ILG) des Bilds repräsentativen Information aus den Werten der ersten Luminanzkomponente der Elemente des Bilds,
- Berechnen (E2) eines Ausbreitungsexponenten ($\gamma$) in Abhängigkeit von der bestimmten Information des Helligkeitsgesamtniveaus,
- Umwandeln (E3) der ersten Luminanzkomponenten der Elemente des Bilds in zweite Luminanzkomponenten, das für ein Element des Bilds die Berechnung eines Luminanzzwischenwerts unter Anwendung des berechneten Ausbreitungsexponenten auf den ersten Luminanzkomponentenwert und die Multiplikation des berechneten Zwischenwerts mit der Länge des zweiten Intervalls vorbestimmter Werte aufweist,

aufweist,
**dadurch gekennzeichnet, daß** der berechnete Ausbreitungsexponent eine abnehmende Funktion der bestimmten Information des Helligkeitsgesamtniveaus ist, wodurch der Wert des Ausbreitungsexponenten abnimmt, wenn das Helligkeitsgesamtniveau zunimmt.

**2.** Verfahren zur Verarbeitung mindestens eines digitalen Bilds zur Wiedergabe auf einer Anzeigevorrichtung gemäß Anspruch 1, **dadurch gekennzeichnet, daß** der berechnete Exponent zum Logarithmus des inversen Werts der für ein Helligkeitsgesamtniveau repräsentativen Information proportional ist.

**3.** Verfahren zur Verarbeitung mindestens eines digitalen Bilds zur Wiedergabe auf einer Anzeigevorrichtung gemäß Anspruch 2, **dadurch gekennzeichnet, daß** der Schritt des Bestimmens (E1) eines Helligkeitsgesamtniveaus das Erhalten (E12) eines Medianwerts der Luminanzkomponente des Bilds und die Normierung des erhaltenen Medianwerts aufweist und daß die für ein Helligkeitsgesamtniveau des Bilds repräsentative Information zum normierten erhaltenen Medianwert proportional ist.

**4.** Verfahren zur Verarbeitung mindestens eines digitalen Bilds zur Wiedergabe auf einer Anzeigevorrichtung gemäß dem vorangehenden Anspruch, **dadurch gekennzeichnet, daß** der Schritt des Bestimmens (E1) einer für ein Helligkeitsgesamtniveau repräsentativen Information außerdem einen vorangehenden Schritt (E11) der Umwandlung der ersten Luminanzkomponente des ersten kolorimetrischen Raums in eine als Helligkeit bezeichnete Luminanzkomponente eines zweiten kolorimetrischen Raums vor dem Schritt des Berechnens des Ausbreitungsexponenten aufweist und daß der Medianwert aus der Helligkeitskomponente erhalten wird.

**5.** Verfahren zur Verarbeitung mindestens eines digitalen Bilds zur Wiedergabe auf einer Anzeigevorrichtung gemäß einem der Ansprüche 3 oder 4, **dadurch gekennzeichnet, daß** das Verfahren einen Schritt der Normierung (E13) des Medianwerts zwischen 0 und 1 vor dem Schritt des Berechnens des Ausbreitungsexponenten aufweist und daß es einen Schritt (E14) der Korrektur des normierten Medianwerts aufweist, wobei ein Wert zwischen 0 und a, eine reelle positive, von Null verschiedene Zahl, die kleiner als 1 ist, als Wert a gesetzt wird und ein Wert zwischen b und 1, mit b als reeller Zahl größer als a und kleiner als 1, als Wert b gesetzt wird.

6. Verfahren zur Verarbeitung mindestens eines digitalen Bilds zur Wiedergabe auf einer Anzeigevorrichtung gemäß dem vorangehenden Anspruch, **dadurch gekennzeichnet, daß** der Schritt des Umwandelns (E3) die folgenden Gleichungen umsetzt:

$$Y_2 = L_{max}.Y_1^{\gamma}$$

mit

$$\gamma = 1 + log_{10} \frac{1}{\overline{L^*_{med,n}}}$$

wobei $Y_1$ die erste Luminanzkomponente, $Y_2$ die zweite Luminanzkomponente, $L_{max}$ die Länge des zweiten Intervalls von Luminanzwerten, $log_{10}$ den Zehnerlogarithmus, $\gamma$ den auf die erste Luminanzkomponente $Y_1$ angewandten Ausbreitungsexponenten und $\overline{L^*_{med,n}}$ den normierten und geclipsten Luminanzmedianwert bezeichnet.

7. Verfahren zur Verarbeitung mindestens eines digitalen Bilds gemäß einem der vorangehenden Ansprüche, **dadurch gekennzeichnet, daß** es einen Schritt (E4) des Umwandelns der ersten Chrominanzkomponenten (C1) des Bilds in zweite Komponenten (C2) durch Anwenden eines Ausbreitungskoeffizienten, der zu einem Verhältnis zwischen der zweiten Luminanzkomponente und der ersten Luminanzkomponente proportional ist, auf die ersten Chrominanzkomponenten gemäß dem folgenden Ausdruck

$$C_2 = \frac{C_1.Y_2}{Y_1}$$

aufweist.

8. Verfahren zur Verarbeitung mindestens eines digitalen Bilds gemäß einem der Ansprüche 1 bis 6, **dadurch gekennzeichnet, daß** es einen Schritt (E4) des Umwandelns der ersten Chrominanzkomponenten (C1) des Bilds in zweite Chrominanzkomponenten (C2) aufweist, der einen Unterschritt (E41) der Farbkorrektur durch Anwenden einer Korrekturfunktion auf die ersten Chrominanzkomponenten aufweist, die von der ersten und der zweiten Luminanzkomponente ($Y_1$, $Y_2$) und einem Sättigungsfaktor (s), der eine reelle Zahl größer als 1 ist, gemäß dem folgenden Ausdruck

$$C2 = \left( \left( \frac{C_1}{Y_1} - 1 \right).s + 1 \right) Y_2$$

abhängt.

9. Verfahren zur Verarbeitung mindestens eines digitalen Bilds gemäß Anspruch 8, **dadurch gekennzeichnet, daß** der Schritt des Umwandelns (E4) einen Unterschritt (E42) der Konversion der zweiten Chrominanzkomponenten von einem ersten kolorimetrischen Raum zu einem zweiten kolorimetrischen Raum, der größer als der erste ist, aufweist.

10. Vorrichtung (100) zur Verarbeitung mindestens eines digitalen Bilds ($II_n$) zur Wiedergabe auf einer Anzeigevorrichtung (20), wobei das Bild Bildelemente aufweist, wobei ein Bildelement Farbinformationen zugeordnet ist, die in einem ersten kolorimetrischen Raum dargestellt sind, der eine von Chrominanzkomponenten getrennte Luminanz-komponente ($Y_1$) aufweist, wobei die Luminanzkomponente einen in einem ersten vorbestimmten Werteintervall liegenden Wert aufweist, wobei die Anzeigevorrichtung geeignet ist, Luminanzkomponentenwerte der Bildelemente wiederzugeben, die in einem zweiten vorbestimmten Werteintervall enthalten sind, das eine größere Länge als die des ersten Intervalls hat, wobei die Vorrichtung eine programmierbare Rechenmaschine oder eine spezifische Rechenmaschine aufweist, die zum

# EP 3 391 331 B1

- Bestimmen (DET ILG) einer für ein von einem Beobachter wahrgenommenen Helligkeitsgesamtniveau (ILG) des Bilds repräsentativen Information aus den Werten der ersten Luminanzkomponente der Elemente des Bilds,
- Berechnen (CALC y) eines Ausbreitungsexponenten ($\gamma$) in Abhängigkeit von der bestimmten Information des Helligkeitsgesamtniveaus,
- Umwandeln (TRANSF) der ersten Luminanzkomponenten der Elemente des Bilds in zweite Luminanzkomponenten, das für ein Element des Bilds die Berechnung eines Luminanzzwischenwerts unter Anwendung des berechneten Ausbreitungsexponenten auf den ersten Luminanzkomponentenwert und die Multiplikation des berechneten Zwischenwerts mit der Länge des zweiten Intervalls vorbestimmter Luminanzwerte aufweist,

geeignet und ausgelegt ist,
**dadurch gekennzeichnet, daß** der berechnete Ausbreitungsexponent ($\gamma$) eine abnehmende Funktion der bestimmten Information des Helligkeitsgesamtniveaus ist, wodurch der Wert des Ausbreitungsexponenten abnimmt, wenn das Helligkeitsgesamtniveau zunimmt.

11. Endgeräteausrüstung (10), die dazu geeignet und ausgelegt ist, eine Folge digitaler Bilder zu erhalten und eine Folge digitaler Bilder an eine Anzeigevorrichtung (20) zu übertragen, die geeignet und dazu ausgelegt ist, diese wiederzugeben, **dadurch gekennzeichnet, daß** sie eine Vorrichtung (100) zur Verarbeitung mindestens eines digitalen Bilds gemäß Anspruch 10 aufweist.

12. Computerprogrammprodukt ($Pg_1$) mit Programmcodeanweisungen für die Durchführung eines Verfahrens gemäß einem der Ansprüche 1 bis 9, wenn das Programm auf einem Computer durchgeführt wird.

13. Mit einem Computer lesbares und nicht transientes Speichermedium, das ein Computerprogrammprodukt ($Pg_1$) gemäß Anspruch 12 speichert.

## Claims

1. A method for processing at least one digital image ($II_n$) for rendering it on a display device (20), said image comprising image elements, an image element being associated with colour information represented in a first colour space comprising a first luminance component ($Y_1$) and first chrominance components, said first luminance component having a value within a first range of predetermined values, said display device being adapted to render luminance component values of the image elements within a second range of predetermined values, of length greater than that of the first range, said method comprising the steps of:

   - determining (E1) information representative of a global brightness level (ILG) of the image perceived by an observer, based on the values of the first luminance component of the elements of the image;
   - calculating (E2) an expansion exponent ($\gamma$) as a function of the determined global brightness level information;
   - transforming (E3) the first luminance components of the image elements into second luminance components, comprising for an element of the image, the calculation of an intermediate luminance value by applying the calculated expansion exponent to the first luminance component value and the multiplication of the calculated intermediate value by the length of the second range of predetermined values,

   **characterised in that** the calculated expansion exponent is a decreasing function of the determined global brightness level information enabling the value of the expansion exponent to decrease when the global brightness level increases.

2. A method for processing at least one digital image for rendering it on a display device according to claim 1, **characterised in that** the calculated exponent is proportional to the logarithm of the inverse of the information representative of a global brightness level of the image.

3. A method for processing at least one digital image for rendering it on a display device according to claim 2, **characterised in that** the step of determining (EI) a global brightness level comprises obtaining (E12) a median value of the luminance component of the image, and normalising the obtained median value, and **in that** the information representative of a global brightness level of the image is proportional to the obtained normalised median value.

4. A method for processing at least one digital image for rendering it on a display device according to the previous claim, **characterised in that** the step of determining (E1) information representative of a global brightness level further comprises a preliminary step (E11) of converting the first luminance component of the first colour space into a luminance component, called lightness, of a second colour space, prior to the step of calculating the expansion exponent, and **in that** the median value is obtained from the lightness component.

5. A method for processing at least one digital image for rendering it on a display device according to one of claims 3 or 4, **characterised in that** the method comprises a step of normalising (E13) the median value between 0 and 1, prior to the step of calculating the expansion exponent, and that it comprises a step (E14) of correcting the normalised median value, a value comprised between 0 and a, a positive real non-zero number less than 1, being set to the value a and a value comprised between b and 1, with b a real number greater than a and less than 1, being set to the value b.

6. A method for processing at least one digital image for rendering it on a display device according to the previous claim, **characterised in that** the transformation step (E3) implements the following equations:

$$Y_2 = L_{max} . Y_1^{\gamma}$$

with $\gamma = 1 + log_{10} \dfrac{1}{\overline{L^*_{med,n}}}$ where $Y_1$ designates the first luminance component, $Y_2$ the second luminance component, $L_{max}$ the length of the second range of luminance values, $log_{10}$ the decimal logarithm, $\gamma$ the expansion exponent applied to the first luminance component Y1 and $\overline{L^*_{med,n}}$ the median luminance value which is normalised and clipped.

7. A method for processing at least one digital image according to one of the previous claims, **characterised in that** it comprises a step (E4) of transforming the first chrominance components (C1) of the image into second components (C2), by applying to the first chrominance components an expansion coefficient proportional to a ratio between the second luminance component and the first luminance component, according to the following expression:

$$C_2 = \frac{C_1 . Y2}{Y_1}$$

8. A method for processing at least one digital image according to one of claims 1 to 6, **characterised in that** it comprises a step (E4) of transforming the first chrominance components (C1) of the image into second chrominance components (C2), comprising a sub-step (E41) of colour correction by applying to the first chrominance components a correction function which depends on the first and the second luminance components (Y1, Y2) and a saturation factor (s), which is a real number strictly greater than 1, according to the following expression:

$$C_2 = \left( \left( \frac{C_1}{Y_1} - 1 \right) . s + 1 \right) Y_2$$

9. A method for processing at least one digital image according to claim 8, **characterised in that** the step of transforming (E4) comprises a sub-step (E42) of converting second chrominance components from a first colour space to a second colour space, larger than the former.

10. A device (100) for processing at least one digital image ($II_n$) for rendering it on a display device (20), said image comprising image elements, an image element being associated with colour information represented in a first colour space comprising a first luminance component ($Y_1$) separated from chrominance components, said first luminance component having a value within a first predetermined range of values, said display device being adapted to render luminance component values of the image elements within a second predetermined range of values, of greater length than that of the first range, said device comprising a reprogrammable computing machine or a dedicated computing machine, capable of and configured for:

    - determining (DET ILG) information representative of a global brightness level of the image, perceived by an observer, based on the values of the first luminance component of the elements of the image;
    - calculating (CALC $\gamma$) an expansion exponent as a function of the determined global brightness level information;

- transforming (TRANSF) the first luminance components of the image elements into second luminance components, comprising for an element of the image, the calculation of an intermediate luminance value by applying the calculated expansion exponent to the first luminance component value and the multiplication of the calculated intermediate value by the length of the second range of predetermined luminance values,

**characterised in that** the calculated expansion exponent ($\gamma$) is a decreasing function of the determined global brightness level information enabling the value of the expansion exponent to decrease when the global brightness level increases.

11. A terminal equipment (10) capable of and configured for obtaining a sequence of digital images and to transmit a sequence of digital images to a display device (20) capable of and configured for rendering it, **characterised in that** it comprises a device (100) for processing at least one digital image according to claim 10.

12. A computer program product ($Pg_1$), comprising program code instructions for implementing a method according to any one of claims 1 to 9, when said program is executed on a computer.

13. A non-transitory computer-readable storage medium, storing a computer program product ($Pg_1$) according to claim 12.

FIG. 1

E0 — CONVERT RGB ->XYZ

$I_I(XYZ)$

E1 — DET IIG

E2 — CALC $\gamma$

E3 — TRANSF Y

Y2

E4 — DERIVE R2, G2, B2

$I_O$

# FIG. 2

E1 — E11 — CONV Y -> L*

E12 — CALC L*MED

E13 — NORM L*MED

L*MED,n

E14 — CLIP L*MED

$\overline{L*MED,n}$

# FIG. 3

$$\gamma = 1 + log_{10}\left(\frac{1}{L^*}\right)$$

FIG. 4A

$$\gamma = 1 + log_{10}\left(\frac{1}{L^*}\right)$$

FIG. 4B

FIG. 5

FIG. 5A

FIG. 6A

FIG. 6B

FIG. 6C

FIG. 6D

FIG. 7

FIG. 8C

FIG. 8A

FIG. 8D

FIG. 8B

FIG. 8E

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **AKYUZ et al.** Do HDR displays support LDR content? A Psychophysical Evaluation. *ACM SIGGRAPH 2007 Papers*, 2007, 38

- Evaluation of Reverse Tone Mapping Through Varying Exposure Conditions. **MASIA et al.** ACM Transactions on Graphics. 2009, vol. 28, 160